# EUROPEAN PATENT SPECIFICATION

(11) **EP 1 227 041 B1**
(45) Date of publication and mention of the grant of the patent: **17.10.2007**
(21) Application number: 02075177.2
(22) Date of filing: 16.01.2002
(51) Int. Cl.: B65B 61/18, B31B 1/84

(54) **Container closure attaching device**
Vorrichtung zum Anbringen eines Behälterverschlusses
Dispositif pour fixer une fermeture à un récipient

(30) Priority: 26.01.2001 JP 2001018134
(43) Date of publication of application: 31.07.2002
(73) Proprietor: Shikoku Kakoki Co., Ltd., Itano-gun, Tokushima 771-0287 (JP)
(72) Inventor: Kondo, Masakatsu, Shikoku Kakoki Co., Ltd., Itano-gun, Tokushima 771-0287 (JP); Nishio, Yoji, Shikoku Kakoki Co., Ltd., Itano-gun, Tokushima 771-0287 (JP); Fujikawa, Yasuji, Shikoku Kakoki Co., Ltd., Itano-gun, Tokushima 771-0287 (JP); Ueda, Michio, Shikoku Kakoki Co., Ltd., Itano-gun, Tokushima 771-0287 (JP)
(74) Representative: Dorna, Peter

(56) References cited:
- EP-A- 0 749 904
- EP-A- 0 800 994
- EP-A- 0 819 611
- GB-A- 2 238 287
- US-A- 6 085 489

## Description

### BACKGROUND OF THE INVENTION

The present invention relates to a container plug attaching device for use with containers, such as cartons to be filled with sake or the like, for attaching a plug to an edge portion of the container defining an outlet thereof.

As disclosed, for example, in the publication of JP-A No. 10-77012, devices of the type mentioned are already known which comprise two anvils, a horizontal rotary shaft having mounted thereon the two anvils as spaced apart from each other by 180 degrees and projecting radially of the shaft, drive means for driving the rotary shaft intermittently through 180 degrees at a time so as to stop the two anvils alternately in a downward sealing posture and an upward supply posture, a sealing member to be opposed to the anvil as stopped in the sealing posture, and a chute for supplying a plug to the anvil as stopped in the supply posture.

Since the conventional device described above has two anvils, the two anvils need to be adjusted individually so that each anvil will be stopped accurately in both the sealing posture and the supply posture. However, the adjusting work is cumbersome and requires much time.

GB 2 238 287 A discloses a carton filling machine according to the preamble of claim 1 having a station for applying a pouring spout into a preformed hole in the upper legion of an open-topped partly-formed carton, the station comprising a rotatable mandrel provided with at least one and preferably two bosses projecting therefrom. The or each boss is fixed relative to the mandrel, displacement of the spout into the hole in the upper regions of the carton and subsequent withdrawal of the boss from the spout being achieved by actual displacement of the rotatable mandrel. From a bowl feeder cap/spout assemblies are conveyed via stationary guides to a transfer point so positioned that, as the mandrel rotates, a boss takes up the lower most assembly and, using stationary guide rails, that assembly is positioned onto the boss during an indexing period. A carton transfer chain and the spout application station are synchronously indexed, such that the rotating mandrel carrying the cap/spout assembly enters the open top of the carton in one continuous movement.

### SUMMARY OF THE INVENTION

An object of the present invention is to provide a container plug attaching device wherein an anvil or anvils are adjustable easily within a short period of time.

The present invention provides a container plug attaching device for attaching to an edge portion of a container defining an outlet thereof a tubular plug having an opening at one end and a flange around an edge portion defining the opening, the device having an anvil and a sealing member for clamping therebetween the container edge portion and the flange as pressed against the container edge portion for sealing, wherein at least one anvil is mounted on a rotary shaft so as to project radially thereof, the rotary shaft being intermittently drivable by drive means so as to stop the anvil in a sealing posture, anvils being equal in number to the number of sealing postures when provided and to the number of sealing members, the sealing member or each of the sealing members being positionable as opposed to a clamping face of the anvil or each of the anvils as halted in the sealing posture, wherein
the clamping face of the anvil is provided with an engaging projection for fitting the plug thereover, and supply means for supplying the plug to the anvil has a plug transport member having a delivery opening opposed to a path of movement of the projection for transporting the plug with the end opening thereof facing toward the same direction as the delivery opening. The plug transport member is provided with delivery means for pushing out the plug from the delivery opening so as to fit the plug over the projection as moved to the position of the delivery opening, wherein
the delivery means has a pushing-out member movable through the delivery opening toward or away from the path of movement of the projection, and the pushing-out member has a plug suction face opposed to the path of movement of the projection. The suction face is so shaped as to gradually approach the path of movement of the projection from an upstream side thereof with respect to the path toward a downstream side thereof. The distance between the clamping face of the anvil and the path downstream side of the suction face of the pushing-out member as moved toward the path is equal to the height of the plug. The plug can then be engaged with the projection in movement by utilizing the movement of the projection, thereafter rotated and thereby reliably fitted over the projection.

The rotary shaft extends horizontally, the anvil is directed downward when in the sealing posture, and a container transport conveyor is provided at a level below the rotary shaft and has a container transport path extending in a direction transverse to the rotary shaft and joining a lower end of the path of movement of the projection. The anvil and the conveyor are driven in synchronism so as to insert an outer end of the anvil as moved toward the sealing posture into an upper-end opening of the container and to position the container edge portion between the projection of the anvil in the sealing posture and the sealing member. The container then need not be moved up and down for attaching the plug to the container. An increased length of time is therefore available for sealing during the cessation of transport.

The anvil has a base end portion fixed to the rotary shaft and an outer end portion provided with plug holding means, and the outer end portion is offset from the base end portion axially of the rotary shaft by a distance greater than the distance corresponding to the thickness of the base end portion. For example when two anvils are used for transporting two containers by two pitches at a time, the two anvils can then be so arranged that the outer end portion of one anvil is positioned alongside the base end portion of the other anvil to juxtapose these end portions axially of the rotary shaft, whereby the pitch of anvils arranged can be diminished.

### BRIEF DESCRIPTION OF THE DRAWINGS

FIG. 1 is a view in vertical cross section showing an arrangement including a plug attaching device according to the invention;
FIG. 2 is a view in vertical longitudinal section taken along the line II-II in FIG. 1;
FIG. 3 is a perspective view of an anvil and a pushing-out member of the device;
FIG. 4 includes diagrams for illustrating containers and the anvil as moved by the device;
FIG. 5 includes diagrams for illustrating the anvil and the pushing-out member as moved by the device;
FIG. 6 is an exploded perspective view of the container and a plug for use with the device;
FIG. 7 is a plan view of a plug attaching device of another embodiment;
FIG. 8 includes diagrams for illustrating the operation of the device;
FIG. 9 is a perspective view of an example of modified anvil; and
FIG. 10 is a perspective view of anvils as another modification.

### DESCRIPTION OF THE PREFERRED EMBODIMENTS

Embodiments of the present invention will be described below with reference to the drawings.

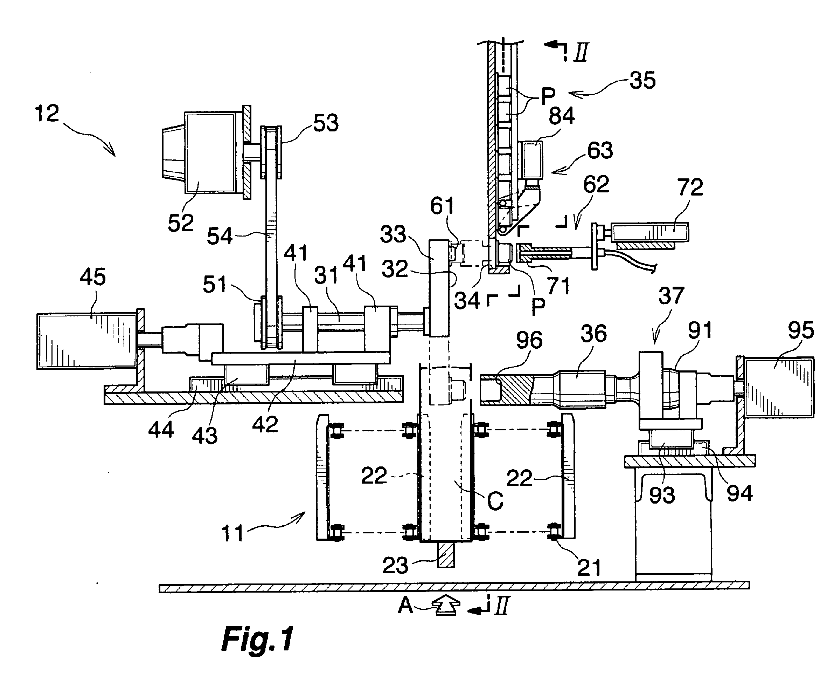

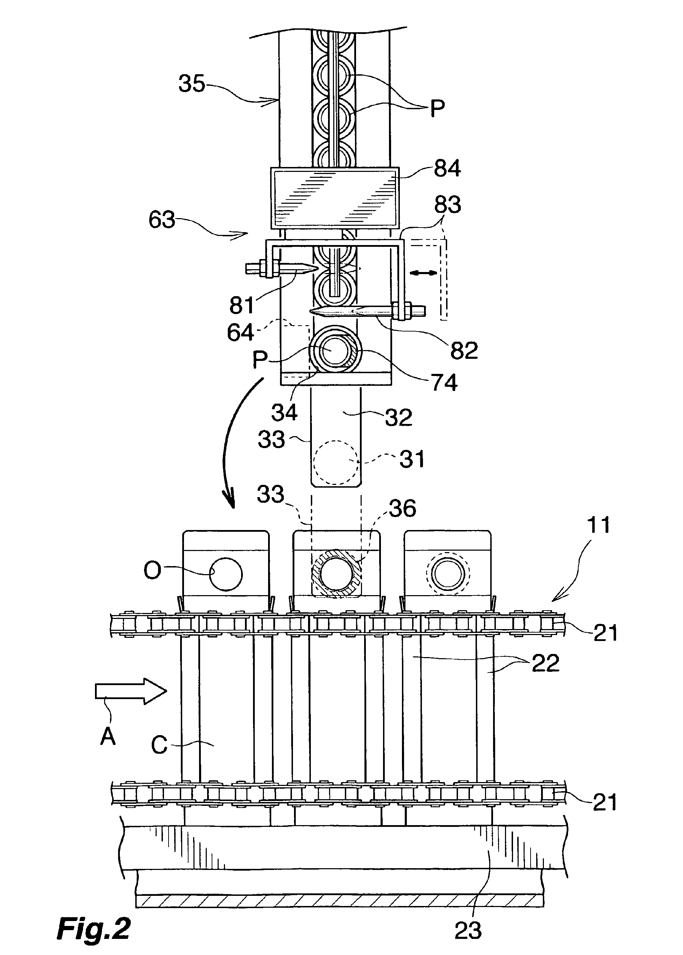

In the following description, the term "front" refers to the direction in which the container on the conveyor advances (as indicated by an arrow in FIGS. 1 and 2), and the term "rear" to the opposite direction. The terms "left" and "right" refer respectively to the left and right sides of the device as it is seen from behind forward (i.e., the left-hand side and right-hand side of FIG. 1).

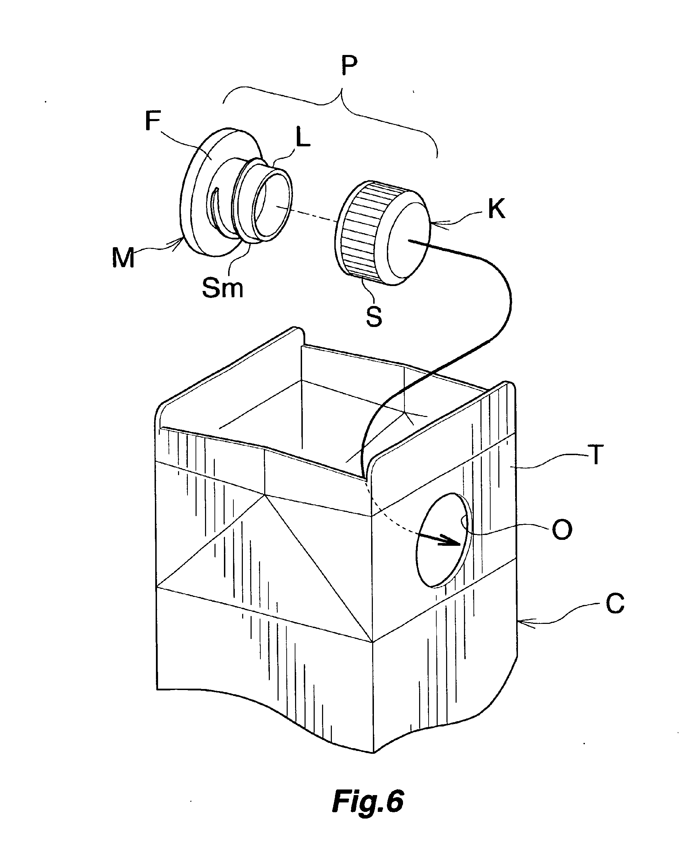

FIG. 6 shows in detail the container C and the plug P for use with the device embodying the invention.

The container C is made of a paper-base laminate having a polyethylene layer over each of its opposite surfaces and in the form of a tube having a bottom and rectangular to square in cross section. The container C has a circular outlet O formed in the center of a rectangular top panel for providing a top T.

The plug P comprises a plug body M and a cap K each molded integrally from a thermoplastic resin.

The plug body M comprises a cylindrical trunk wall L, and an annular flange F formed at the lower end of the wall. The trunk wall L is provided with a male screw Sm formed on its outer surface.

The cap K has a skirt S so sized as to be insertable loosely through the outlet O. The skirt S is provided on its inner surface with a female screw (not shown) screwed on the male screw Sm. The cap K as fitted around the trunk wall L is fitted into the outlet O from inside the container C.

FIG. 1 shows a conveyor 11 for transporting containers C forward, and a plug sealing device 12 for attaching the plug P to the container C to be transported by the conveyor 11.

The conveyor 11, which is an intermittently drivable chain conveyor, comprises a pair of horizontal endless chains 21, holders 22 arranged on the chains 21 at a predetermined spacing for holding containers C while rendering the containers free to move upward or downward, and a horizontal guide rail 23 disposed below the path of movement of the container for supporting the bottom of the container C thereon for guiding.

The container C is held by the holder 22, with its top T projecting upward and with its outlet O facing toward the right. The chains 21 are intermittently driven so as to stop the containers C one after another at a sealing station.

The plug sealing device 12 comprises a horizontal rotary shaft 31 extending from left to right transversely of the path of transport of the container with its right end projecting to above the path, an armlike anvil 33 attached to the right end of the shaft 31 to project radially thereof and having a vertical clamping face 32 facing rightward, a vertical plug chute 35 provided at its lower end with a delivery opening 34 opposed to the clamping face 32 of the anvil 33 as positioned in a vertical upward supply posture, and an ultrasonic sealer 37 having a sealing member 36 and opposed to the clamping face 32 of the anvil 33 as positioned in a downward sealing posture.

The rotary shaft 31 is supported by bearings 41 on a movable body 42 in the form of a horizontal plate and movable transversely of the container transport path. The movable body 42 is supported by slide guide members 43 on horizontal guide rails 44 extending in the transverse direction. Connected to the left end of the movable body 42 is the piston rod of a first fluid pressure cylinder 45 directed toward the right.

A driven sprocket 51 is fixed to the left end of the rotary shaft 31. A belt 54 is reeved around the driven sprocket 51 and a drive sprocket 53 fixed to the output shaft of a servomotor 52.

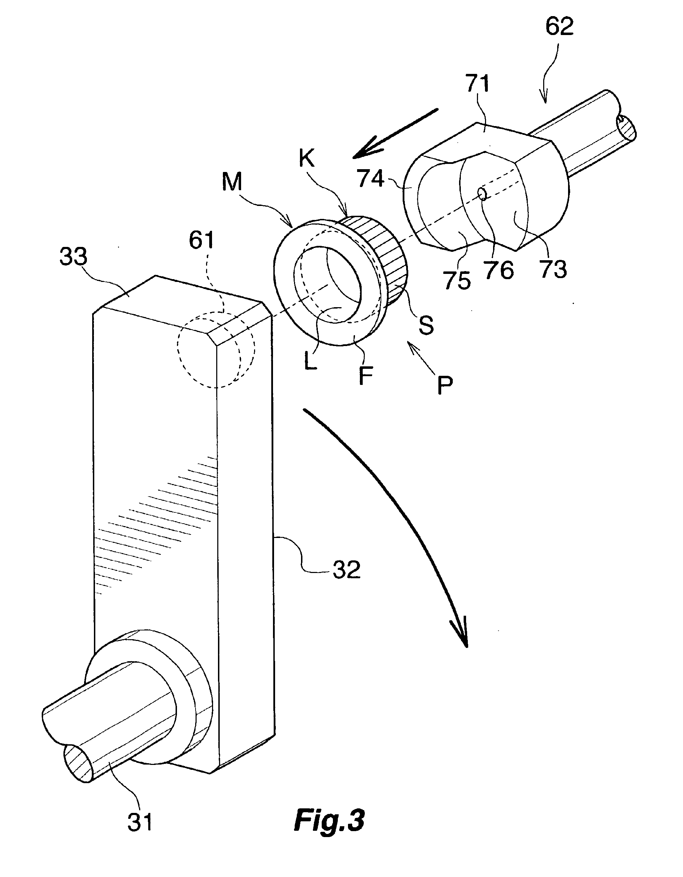

As shown in detail in FIG. 3, the anvil 33 is in the form of an arm extending straight and has a projection 61 at the outer end of the clamping face 32. The projection 61 has an outer periphery so sized as to permit the trunk wall L of the plug P to fit therearound snugly. The projection 61 is positioned as opposed square to the chute delivery opening 34 when the anvil 33 is in its vertical upward supply posture.

The chute 35 contains plugs P as arranged in a vertical row with the openings of their truck walls L facing leftward. A pushing-out member 62 and a cutting member 63 are arranged in the vicinity of the delivery opening 34 of the chute 35. A guide member 64 (FIG. 2) is joined to a chute rear end portion around the opening 34.

The pushing-out member 62 is in the form of a horizontal rod having a vacuum head 71 at its left end and extending transversely of the container transport path. The pushing-out member 62 is connected to the piston rod of a second fluid pressure cylinder 72 directed leftward so as to move the vacuum head 71 into or out of the delivery opening 34 across the chute 35.

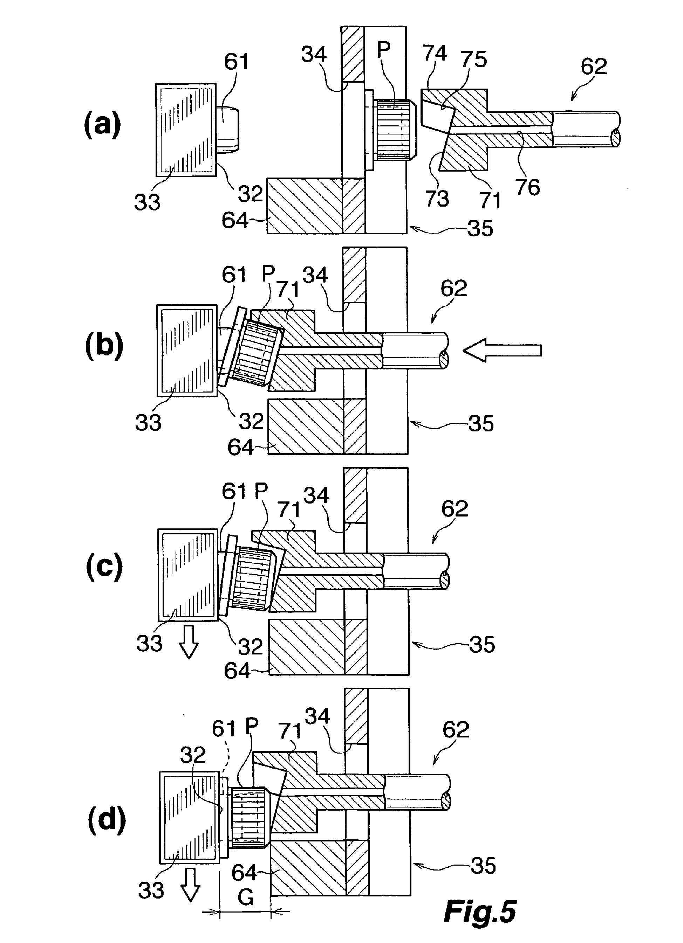

With reference to FIGS. 3 and 5, the vacuum head 71 is in the form of a generally vertical elliptical plate and has a suction face 73 facing leftward. The suction face 73, which is a vertical flat face, deflects gradually leftward as it extends from the front rearward, thus facing toward a leftwardly forward oblique direction. The suction face 73 is provided at its front edge with a positioning ridge 74 having a circular-arc cross section. The ridge 74 has a side face 75 facing rearward, circular-arc in cross section to position along the outer periphery of the cap K of the plug P and orthogonal to the suction face 73. A suction hole 76 is formed in the center of the suction face 73. With the clamping face 32 of the anvil 33 opposed to the delivery opening 34 of the chute 35, the distance between the clamping face 32 and the suction face 73 gradually decreases from the front toward the rear, and the distance G [FIG. 5(d)] between the clamping face 32 and the rear edge of the suction face 73 is slightly greater than the height of the plug P. The distance G is equal to the distance between the left guide face of the guide member 64 and the clamping face 32.

As shown in detail in FIG. 2, the cutting member 63 comprises a forward upper engaging round rod 81 and a rearward lower engaging round rod 82 which are interconnected by a connecting bar 83 and alternately engageable with or disengageable from the plug P at a position one above the lowermost plug P within the chute 35 and the plug P overlying the former plug P. The cutting member 63 is movable forward and rearward by a rodless third fluid pressure cylinder 84.

When the cutting member 63 is moved rightward and leftward by the operation of the third fluid pressure cylinder 84, the plugs P stacked in a vertical row within the chute 35 are allowed to fall one by one from the lowermost position of the row.

The ultrasonic sealer 37 has a body 91 provided with the sealing member 36 projecting therefrom leftward and in the form of a horizontal round bar termed a horn and serving as an element for transmitting ultrasonic waves. The sealer body 91 is supported by a slide guide member 93 on a transverse guide rail 94. A leftward fourth fluid pressure cylinder 95 has a piston rod connected to the right end of the sealer body 91. A cavity 96 opened leftward for the cap K to advance thereinto is formed in the left end of the sealing member 36.

The rotary shaft 31 is driven into counterclockwise rotation by the servomotor 52 when seen from the right side thereof. The shaft 31 is halted only when the anvil 33 is brought into the vertical downward sealing posture, and is held in rotation except when the anvil 33 is in this posture. Accordingly, the anvil 33 is not halted when in the supply posture, moving past the chute delivery opening 34 from the front rearward at the left side thereof.

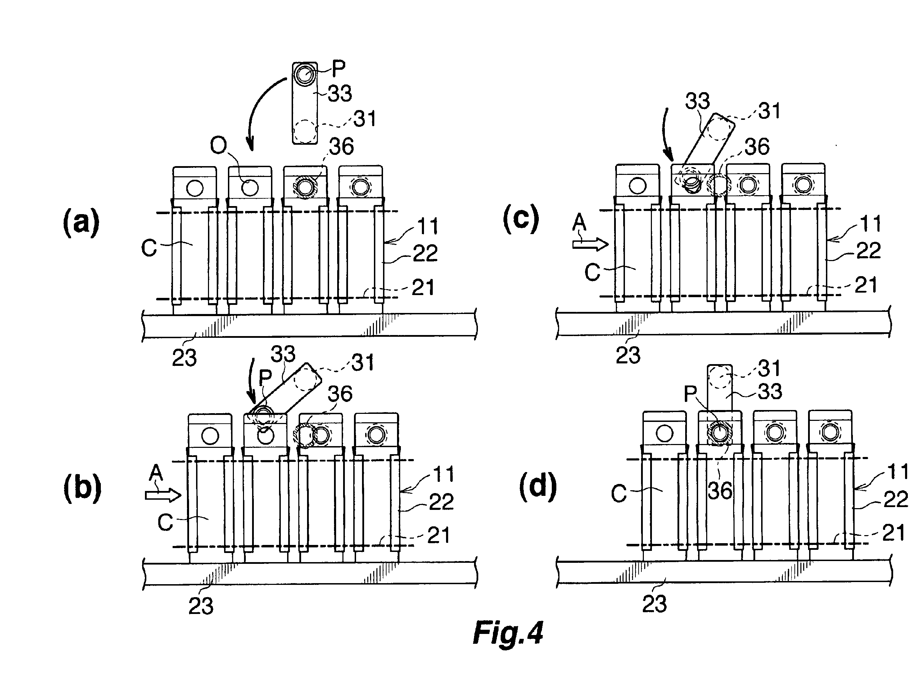

The container C is moved forward toward the sealing station. When moving toward the sealing posture, the anvil 33 is moved so as to rotate counterclockwise in the manner shown in FIG. 4 in sequence. The container and the anvil are moved as timed to avoid interference therebetween. When the container C is eventually brought to the sealing station, the outer end of the anvil 33 is inserted into the upper-end opening of the container C, and the projection 61 of the anvil 33 and the cavity 96 of the sealing member 36 are positioned on a line through the container outlet O.

When the second fluid pressure cylinder 72 advances its piston rod before the anvil 33 rotating upward from the sealing posture moves past the chute delivery opening 34, the pushing-out member 62 moves leftward, holding by suction the top of the cap K of the plug P at the lowermost position within the chute 35. In this state, the opening of the plug trunk wall L faces toward the same leftwardly forward oblique direction as the suction face 73. The pushing-out member 62 is further moved leftward in this state to deliver the plug P from the opening 34 and advance the plug to a standby position in the path of movement of the projection 61. When the upwardly rotating anvil 33 moves past the chute delivery opening 34 at the left side thereof, the plug trunk wall L is fitted around the projection 61. This movement is shown in FIG. 5 in sequence. First, the projection 61 engages with the rear edge of the plug trunk wall L defining the opening thereof as seen in FIG. 5(b). When the anvil 33 subsequently moves rearward as shown in FIG. 5(c), the plug P is also moved in the same direction slidingly on the suction face 73 along with the projection 61. The suction face 73 pushes the top of the cap K of the moving plug P, whereby the trunk wall L of the pushed plug P is fitted around the projection 61 gradually to a greater depth. The wall L is eventually fitted around the projection 61 completely and retained thereon as seen in FIG. 5(d).

The plug P moves along with the projection 61 while being guided by the guide member 64. This ensures stabilized delivery of the plug P to the anvil 33, obviating the likelihood that the plug P will inadvertently slip off the projection 61. However, the guide member 64 need not always be provided.

The anvil 33 holding the plug P on the projection 61 rotates from the supply posture to the sealing posture. When brought into the sealing posture, the anvil 33 is halted from rotation, whereupon the first fluid pressure cylinder 45 operates to move the anvil 33 rightward and fit the plug cap K into the outlet O of the container C waiting in position. The sealing member 36 is then moved leftward by the operation of the fourth fluid pressure cylinder 95, pressing the edge portion defining the cavity 96 against the clamping face 32, with the container edge portion defining the outlet O and the flange F interposed therebetween. Ultrasonic waves are produced in this state to seal the outlet-defining edge portion with the flange F.

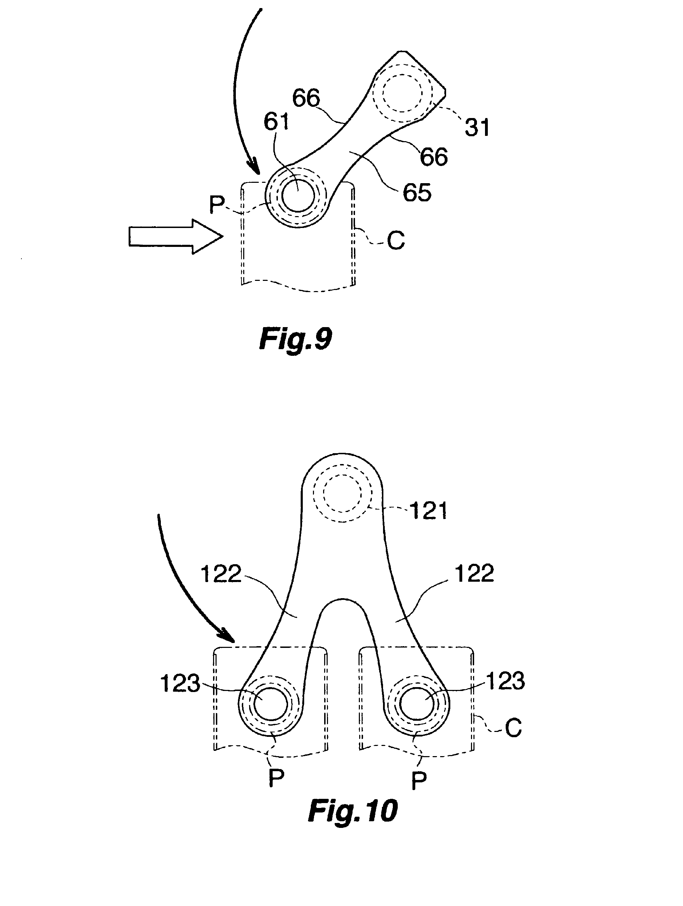

FIG. 9 shows an anvil 33 which has a constricted portion 65 provided at an intermediate portion of its length by forming a circular-arc recessed part 66 in each of its front and rear opposite sides. The anvil thus constructed can be inserted into the container more easily without interfering therewith.

The embodiment described above is used in the case where containers are transported intermittently a distance at a time which distance corresponds to one pitch of containers as arranged for feeding. The embodiment to be described below is adapted for use in the case where containers are transported two pitches at a time.

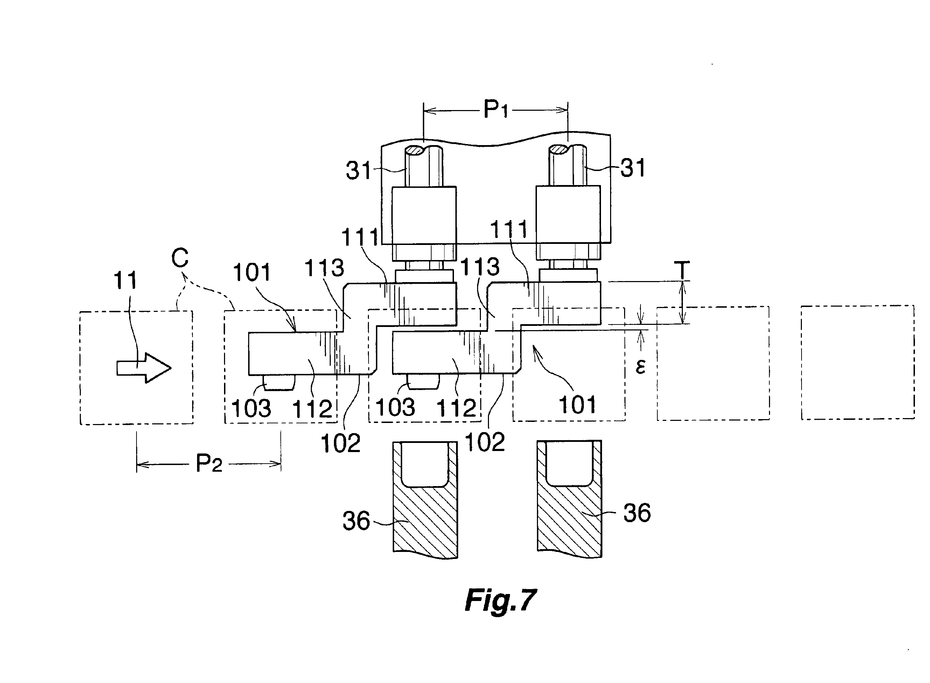

FIG. 7 shows two rotary shafts 31 as arranged in parallel. Each of these shafts 31 is the same as the one included in the first embodiment. The pitch P1 of the rotary shafts 31 is equal to the pitch P2 of adjacent containers C as arranged for transport on the conveyor 11. An anvil 101 is attached to the right end of each rotary shaft 31.

The anvil 101 has a clamping face 102 which is also provided with a projection 103 at the position of the same radius of gyration as the projection 61 on the straight anvil 33 used in the case of the single-pitch transport.

The anvil 101 has the same length as the straight anvil 33, whereas if two straight anvils 33 are used in the present case, one anvil 33 will interfere with the other anvil 33. To avoid this, the anvil 101 is in a bent form as will be described below in detail.

The anvil 101 comprises a base end portion 111 fixed to the rotary shaft 31, an outer end portion 112 provided with the projection 103, and an intermediate portion 113 between the base end portion 111 and the outer end portion 112. The outer end portion 112 is offset from the base end portion 111 rightward along the axis of the shaft 31 by a distance slightly greater than the distance corresponding to the thickness T of the base end portion 111 by a small distance ε.

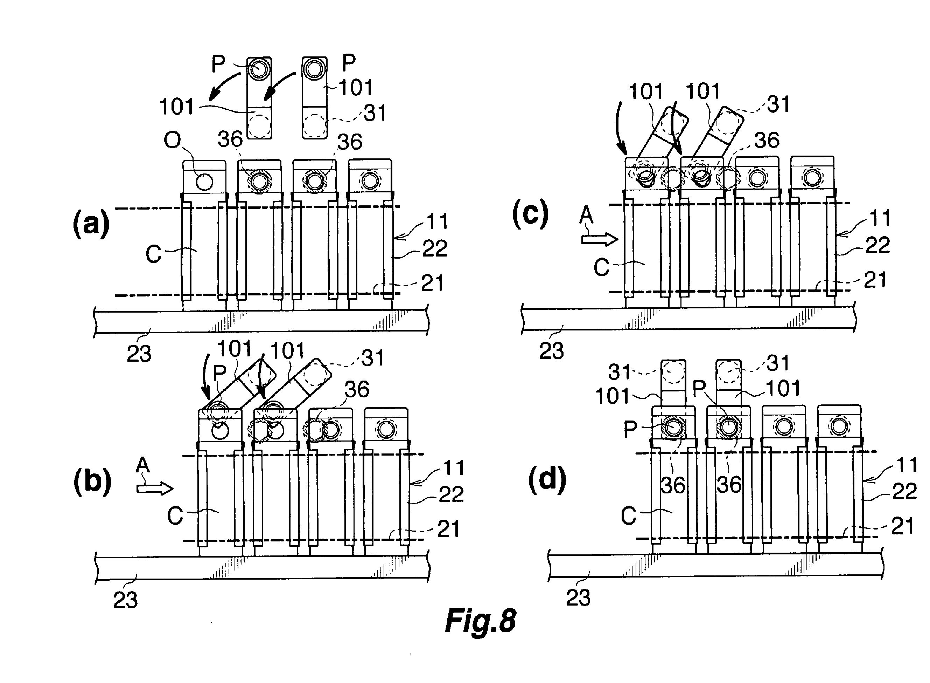

FIG. 8 shows in sequence how the outer ends of the anvils 101 are inserted into respective containers C brought to the sealing station in the case where the two rotary shafts 31 and two anvils 101 are used. The two containers are transported on the conveyor 11 by two pitches at a time. The two shafts 31 are driven in synchronism. The two anvils are rotated in the same phase.

When two rotary shafts 31 and anvils 101 are used in the case where two containers are fed at a time to the sealing station by two pitches, two containers C can be moved at a time along with the anvils 101 at the same timing as in the case of single-pitch transport of containers C. This is also true in the case where containers are fed by three or more pitches at a time.

In the case where containers are fed intermittently by more than one pitch at a time, the rotary shafts and anvils used are equal in number to the number of pitches, and the same number of chutes, as well as the same number of ultrasonic sealers 37, are of course used.

Instead of using the two rotary shafts as described above, an arrangement may be used wherein two anvils 122 as positioned at an angle with each other are mounted on a single rotary shaft 121 as shown in FIG. 10. The two anvils 122 have respective projections 123 which are arranged with the same pitch as the pitch for feeding a single container at a time.

Furthermore, the position where plugs are fed to the anvil can be any location on the path of movement of the projection. The anvil may be halted when to be supplied with the plug. The suction face 73 then need not always face toward an oblique direction but can be positioned in parallel to the path of movement of the projection.

## Claims

1. A container plug attaching device (12) for attaching to an edge portion of a container (C) defining an outlet thereof a tubular plug (P) having an opening at one end and a flange around an edge portion defining the opening, the device having an anvil (33) and a sealing member (36) for clamping therebetween the container edge portion and the flange as pressed against the container edge portion for sealing, wherein
at least one anvil (33) is mounted on a rotary shaft (31) so as to project radially thereof, the rotary shaft (31) being intermittently drivable by drive means (53) so as to stop the anvil (33) in a sealing posture, anvils (33) being equal in number to the number of sealing postures when provided and to the number of sealing members (36), the sealing member or each of the sealing members being positionable as opposed to a clamping face (32) of the anvil (33) or each of the anvils as halted in the sealing posture wherein
the clamping face (32) of the anvil (33) is provided with an engaging projection for fitting the plug thereover, **characterized in that** the supply means (35) for supplying the plug (P) to the anvil (33) has a plug transport member having a delivery opening (34) opposed to a path of movement of the projection for transporting the plug (P) with the end opening thereof facing toward the same direction as the delivery opening (34), the plug transport member being provided with delivery means for pushing out the plug from the delivery opening so as to fit the plug over the projection as moved to the position of the delivery opening (34) wherein
the delivery means has a pushing-out member (62) movable through the delivery opening toward or away from the path of movement of the projection, and the pushing-out member (62) has a plug suction face (73) opposed to the path of movement of the projection, the suction face (73) being so shaped as to gradually approach the path of movement of the projection from an upstream side thereof with respect to the path toward a downstream side thereof, the distance between the clamping face (32) of the anvil (33) and the path downstream side of the suction face (73) of the pushing-out member (62) as moved toward the path is equal to the height of the plug.

2. A container plug attaching device (12) according to claim 1 wherein the rotary shaft (31) extends horizontally, the anvil (33) being directed downward when in the sealing posture, a container transport conveyor (11) being provided at a level below the rotary shaft, the conveyor (11) having a container transport path extending in a direction transverse to the rotary shaft and joining a lower end of the path of movement of the projection, the anvil (33) and the conveyor (11) being drivable in synchronism so as to insert an outer end of the anvil as moved toward the sealing posture into an upper-end opening of the container and to position the container edge portion between the projection (61) of the anvil in the sealing posture and the sealing member.

3. A container plug attaching device according to claim 1 or 2 wherein the anvil (33) has a base end portion fixed to the rotary shaft (31) and an outer end portion provided with plug holding means (61), and the outer end portion is offset from the base end portion axially of the rotary shaft by a distance greater than the distance corresponding to the thickness of the base end portion.

4. A container plug attaching device according to claim 1, 2 or 3 wherein the drive means is so controlled as to stop the anvil only in the sealing posture and which comprises supply means for supplying the plug to the anvil in rotation.

5. A container plug attaching device according to claim 1, 2 or 3 wherein the drive means is so controlled as to stop the anvil in a supply posture different from the sealing posture and which comprises supply means for supplying the plug to the anvil as stopped in the supply posture.

## Patentansprüche

1. Eine Vorrichtung zum Anbringen eines Behälterverschlusses (12), um einen röhrenförmigen Verschluss (P), der eine Öffnung an einem Ende und einen Flansch um einen Kantenbereich, der die Öffnung definiert, aufweist, an einem Kantenbereich eines Behälters (C), der einen Auslass von diesem definiert, anzubringen, wobei die Vorrichtung einen Amboss (33) und ein Versiegelungselement (36) aufweist, um dazwischen den Kantenbereich des Behälters und den Flansch, wenn er zur Versiegelung gegen den Kantenbereich des Containers gedrückt wird, festzuklemmen, wobei wenigstens ein Amboss (33) auf einer Welle (31) montiert ist, um radial von dieser vorzustehen, die Welle (31) durch Antriebsmittel (53) periodisch antreibbar ist, um so den Amboss (33) in einer Versiegelungsposition zu stoppen, wobei die Anzahl der Ambosse (33) gleich der Anzahl der Versiegelungspositionen, wenn diese vorgesehen sind, und der Anzahl der Versiegelungselemente (36) ist, wobei das Versiegelungselement oder jedes der Versiegelungselemente einer Klemmfläche (32) des Amboss (33) oder von jedem der Ambosse, wenn er oder sie in der Versiegelungsposition angehalten ist oder sind, gegenüberliegend positionierbar ist, wobei die Klemmfläche (32) des Amboss (33) mit einem eingreifenden Vorsprung ausgeführt ist, um darauf den Verschluss zu plazieren, **dadurch gekennzeichnet, dass** die Versorgungsmittel (35), die den Verschluss (P) dem Amboss (33) zuzuführen, ein Verschlusstransportelement aufweisen, das eine Zuführöffnung (34) hat, die einem Bewegungspfad des Vorsprungs gegenüber liegt, um den Verschluss (P) zu transportieren, wobei dessen Endöffnung in dieselbe Richtung schaut wie die Zuführöffnung (34), wobei das Verschlusstransportelement mit Zuführmitteln versehen ist, um den Verschluss aus der Zuführöffnung herauszudrücken, so dass der Verschluss auf den Vorsprung gesetzt wird, wenn dieser in die Position der Zuführöffnung (34) bewegt wird, wobei die Zuführmittel ein Ausdrückelement (62) aufweisen, das durch die Zuführöffnung in Richtung oder weg von dem Bewegungspfad des Vorsprungs bewegbar ist, und das Ausdrückelement (62) eine Verschlussansaugfläche (73) aufweist, die dem Bewegungspfad des Vorsprungs gegenüber liegt, und die Ansaugfläche (73) so geformt ist, dass sie schrittweise dem Bewegungspfad des Vorsprungs von einer bezogen auf den Pfad stromaufwärts befindlichen Seite davon zu einer stromabwärts befindlichen Seite davon näher kommt, wobei der Abstand zwischen der Klemmfläche (32) von dem Amboss (33) und dem Pfad in Richtung stromabwärts von der Ansaugfläche (73) des Ausdrückelements (62), wie es zu dem Pfad bewegt wird, gleich der Höhe des Verschlusses ist.

2. Eine Vorrichtung zum Anbringen eines Behälterverschlusses (12) gemäß Anspruch 1, wobei sich die Welle (31) horizontal erstreckt, der Amboss (33), wenn er in der Versiegelungsposition ist, nach unten gerichtet ist, eine Behältertransportfördervorrichtung (11) auf einem Niveau unterhalb der Welle vorgesehen ist, die Fördervorrichtung (11) einen Behältertransportpfad aufweist, der sich in einer Richtung quer zu der Welle erstreckt und auf ein unteres Ende des Bewegungspfads des Vorsprungs trifft, der Amboss (33) und die Fördervorrichtung (11) synchron antreibbar sind, so dass ein äußeres Ende des Amboss, wenn er in die Versiegelungsposition bewegt ist, in eine Öffnung des oberen Endes des Behälters eingeführt wird und der Kantenbereich des Behälters zwischen dem Vorsprung (61) des Amboss in der Versiegelungsposition und dem Versiegelungselement positioniert wird.

3. Eine Vorrichtung zum Anbringen eines Behälterverschlusses gemäß Anspruch 1 oder 2, wobei der Amboss (33) einen Basisendbereich, der an der Welle (31) befestigt ist, und einen äußeren Endbereich, der mit Verschlusshaltemitteln (61) versehen ist, aufweist, und der äußere Endbereich von dem Basisendbereich in axialer Richtung um einen Abstand, der größer als der Abstand ist, der mit der Dicke des Basisendbereichs korrespondiert, von der Welle versetzt ist.

4. Eine Vorrichtung zum Anbringen eines Behälterverschlusses gemäß Anspruch 1, 2 oder 3, wobei die Antriebsmittel so gesteuert werden, dass der Amboss nur in der Versiegelungsposition gestoppt wird, und welche Versorgungsmittel umfasst, um den Verschluss an dem Amboss zur Verfügung zu stellen, wenn dieser in Rotation ist.

5. Eine Vorrichtung zum Anbringen eines Behälterverschlusses gemäß Anspruch 1, 2 oder 3, wobei die Antriebsmittel so gesteuert werden, dass der Amboss in einer Versorgungsposition, die unterschiedlich von der Versiegelungsposition ist, gestoppt wird, und welche Versorgungsmittel umfasst, um den Verschluss an dem Amboss, wenn er in der Versorgungsposition gestoppt ist, zur Verfügung zu stellen.

## Revendications

1. Dispositif (12) pour fixer une fermeture à un récipient pour la fixation à une partie de bord d'un récipient (C) définissant une sortie de celui-ci d'une fermeture tubulaire (P) comprenant une ouverture à une extrémité et une bride autour d'une partie de bord définissant l'ouverture, le dispositif comprenant une enclume (33) et un élément d'étanchéité (36) pour serrer entre ceux-ci la partie de bord du récipient et la bride quand elle est appuyée contre la partie de bord du récipient pour l'étanchéité, dans lequel :
au moins une enclume (33) est montée sur un axe rotatif (31) de façon à être saillante radialement depuis celui-ci, l'axe rotatif (31) pouvant être entraîné de façon intermittente par un moyen d'entraînement (53) de façon à arrêter l'enclume (33) dans une position de fermeture, les enclumes (33) étant égales en nombre au nombre de positions de fermeture, quand elles sont prévues, et au nombre d'éléments de fermeture (36), l'élément de fermeture ou chacun des éléments de fermeture étant positionnable en opposition à une face de serrage (32) de l'enclume (33) ou de chacune des enclumes arrêtée dans la position de fermeture, dans laquelle :
la face de serrage (32) de l'enclume (33) comprend une saillie d'accouplement pour adapter la fermeture sur celle-ci, **caractérisée en ce que** le moyen d'alimentation (35) pour alimenter la fermeture (P) à l'enclume (33) comprend un élément de transport de fermeture comprenant une ouverture d'alimentation (34) opposée à un trajet de mouvement de la saillie pour transporter la fermeture (P) avec l'ouverture d'extrémité de celle-ci orientée face à la même direction que l'ouverture d'alimentation (34), l'élément de transport de fermeture étant doté d'un moyen d'alimentation pour pousser à l'extérieur la fermeture depuis l'ouverture d'alimentation de façon à disposer la fermeture au-dessus de la saillie quand elle est déplacée dans la position de l'ouverture d'alimentation (34), dans laquelle :
le moyen d'alimentation comprend un élément de poussée (62) mobile à travers l'ouverture d'alimentation en direction ou en éloignement du trajet de déplacement de la saillie, et l'élément de poussée (62) comprend une face d'aspiration de la fermeture (73) opposée au trajet de déplacement de la saillie, la face d'aspiration (73) étant formée de façon à approcher progressivement le trajet de déplacement de la saillie depuis un côté amont de celui-ci par rapport au trajet en direction de son côté aval, la distance entre la face de serrage (32) de l'enclume (33) et le trajet du côté aval de la face d'aspiration (73) de l'élément de poussée (62) déplacé vers le trajet est égale à la hauteur de la fermeture.

2. Dispositif pour fixer une fermeture à un récipient (12) selon la revendication 1, dans lequel l'axe rotatif (31) s'étend horizontalement, l'enclume (33) étant dirigée vers le bas quand elle est dans la position de fermeture, un convoyeur de transport de récipient (11) étant disposé à un niveau en dessous de l'axe rotatif, le convoyeur (11) comprenant un trajet de transport de récipient s'étendant dans une direction transversale à l'axe rotatif et joignant une extrémité inférieure du trajet de déplacement de la saillie, l'enclume (33) et le transporteur (11) pouvant être entraînés de façon synchronisée afin d'insérer une extrémité extérieure de l'enclume déplacée vers la position de fermeture dans une ouverture dans une extrémité supérieure du récipient et de positionner la partie de bord du récipient entre la saillie (61) de l'enclume dans la position de fermeture et l'élément de fermeture.

3. Dispositif pour fixer une fermeture à un récipient selon la revendication 1 ou 2, dans lequel l'enclume (33) comprend une partie d'extrémité de base fixée à l'axe rotatif (31) et une partie d'extrémité extérieure comprenant un moyen de maintien de fermeture (61), et la partie d'extrémité extérieure est décalée de la partie d'extrémité de base axialement de l'axe rotatif d'une distance supérieure à la distance correspondant à l'épaisseur de la partie d'extrémité de base.

4. Dispositif pour fixer une fermeture à un récipient selon la revendication 1, 2 ou 3, dans lequel le moyen d'entraînement est contrôlé de façon à arrêter l'enclume seulement dans la position de fermeture, et comprend un moyen d'alimentation pour alimenter la fermeture à l'enclume en rotation.

5. Dispositif pour fixer une fermeture à un récipient selon la revendication 1, 2 ou 3, dans lequel le moyen d'entraînement est commandé de façon à arrêter l'enclume dans une position d'alimentation différente de la position de fermeture, et comprend un moyen d'alimentation pour alimenter la fermeture à l'enclume arrêtée dans la position d'alimentation.
